# EUROPEAN PATENT APPLICATION

(11) **EP 3 435 640 A1**
(43) Date of publication of application: **30.01.2019**
(21) Application number: 16861097.0
(22) Date of filing: 25.10.2016
(51) Int. Cl.: H04M 1/725

(54) **INCOMING CALL VOICE PLAYING METHOD AND SYSTEM, AND BLUETOOTH SMART WATCH**

(30) Priority: 24.03.2016 CN 201610174155
(71) Applicant: JRD Communication Inc., Shenzhen, Guangdong 518057 (CN)
(72) Inventor: ZENG, Peng, HuiZhou Guangdong 516006 (CN)
(74) Representative: Petraz, Gilberto Luigi
(86) International application number: PCT/CN2016/103170
(87) International publication number: WO 2017/161873

(57) **Abstract**

A method for playing an incoming call sound, a system and a bluetooth-based smart watch thereof are described. The method includes establishing a bluetooth connection between a bluetooth-based smart watch and a mobile phone; presetting a plurality of prompt sounds corresponding to a plurality of different telephone numbers; and inquiring one prompt sound based on one telephone number corresponding to an incoming call for playing the prompt sound when the mobile phone receives the incoming call. The user can determine whether to answer the incoming call, or to deal with the incoming call in any other manner when it is inconvenient to answer the incoming call or check the information of the incoming call for the user.

## Description

### BACKGROUND OF THE INVENTION

### Field of Invention

The present invention relates to a technical field of a portable smart apparatus, and more particularly to a method for playing an incoming call sound, a system and a bluetooth-based smart watch thereof.

### Description of Prior Art

In recent years, with the rapid development of bluetooth smart accessories, more and more users utilize bluetooth smart watches, and the types of the bluetooth smart watches are increasingly growing. In Particular, an interconnection of the bluetooth smart watch with a mobile phone is an essential function of the bluetooth smart watch.

Conventionally, when the user is driving a car or is busy, and the mobile phone receives an incoming call sound, however, the user cannot know who the caller is and the user is unable to determine whether to answer the call or reject the call, resulting in greatly affecting an appropriate use of the user.

Consequently, there is a need to improve the conventional technique and develop a novel apparatus.

### SUMMARY OF THE INVENTION

Based on the above-mentioned drawbacks, one objective of the present invention is to provide a method for playing an incoming call sound, a system and a bluetooth-based smart watch thereof in order to solve a problem of conventional bluetooth-based smart watch and a mobile phone which cannot play an incoming call sound.

For the above-mentioned objective, the present invention employs the following technical schemes.

The present invention provides a method for playing an incoming call sound of a bluetooth-based smart watch. The method includes the following steps: establishing a bluetooth connection between a bluetooth-based smart watch and a mobile phone; presetting a plurality of prompt sounds corresponding to a plurality of different telephone numbers; and inquiring one prompt sound based on one telephone number corresponding to an incoming call for playing the prompt sound when the mobile phone receives the incoming call.

In one embodiment, presetting the prompt sounds corresponding to the telephone numbers further comprises a self-learning algorithm to preset the prompt sounds corresponding to the telephone numbers.

In one embodiment, the self-learning algorithm to preset the prompt sounds corresponding to the telephone numbers further comprises acquiring a rank of the telephone numbers based on a contact frequency and a contact time length of the telephone numbers, and presetting a prompt sound corresponding to each telephone number based on the rank of the telephone numbers.

In one embodiment, the prompt sounds comprise a plurality of levels, and each level of the prompt sounds represents a different importance extent.

In one embodiment, the prompt sounds comprise four levels, and each level of the prompt sounds represents the different importance extent.

In one embodiment, inquiring one prompt sound based on one telephone number corresponding to the incoming call for playing the prompt sound when the mobile phone receives the incoming call further comprises receiving an information of the telephone number which is transferred by the mobile phone when the mobile phone receives the incoming call; and inquiring one prompt sound based on the information of the telephone number for playing the inquired prompt sound.

In one embodiment, the information of the telephone number comprises a telephone number and a number of the prompt sound corresponding to the telephone number, and inquiring one prompt sound based on the information of the telephone number for playing the inquired prompt sound further comprises inquiring one prompt sound corresponding to the telephone number based on the number of the prompt sound corresponding to the telephone number for playing the inquired prompt sound.

In one embodiment, presetting the prompt sounds corresponding to the telephone numbers further comprises dividing the telephone numbers into a plurality of groups, wherein the telephone numbers in each group correspond to one prompt sound.

In one embodiment, after inquiring one prompt sound based on one telephone number corresponding to the incoming call for playing the prompt sound when the mobile phone receives the incoming call, the method further comprises:

In one embodiment, feedbacking an operation instruction inputted by a user to the mobile phone for replying a short text message through the mobile phone.

In one embodiment, the short text message is set in advance.

The present invention provides a system for playing an incoming call sound of a bluetooth-based smart watch. The system comprises a coupling unit configured to establish a bluetooth connection between a bluetooth-based smart watch and a mobile phone; a presetting unit configured to preset a plurality of prompt sounds corresponding to a plurality of different telephone numbers; and a playing unit configured to inquire one prompt sound based on one telephone number corresponding to an incoming call for playing the prompt sound when the mobile phone receives the incoming call.

In one embodiment, the presetting unit is configured to preset the prompt sounds corresponding to the telephone numbers by plurality a self-learning algorithm.

In one embodiment, the presetting unit is configured to acquire a rank of the telephone numbers based on a contact frequency and a contact time length of the telephone numbers, and to preset a prompt sound corresponding to each telephone number based on the rank of the telephone numbers.

In one embodiment, the prompt sounds comprise a plurality of levels, and each level of the prompt sounds represents a different importance extent.

In one embodiment, the prompt sounds comprise four levels, and each level of the prompt sounds represents the different importance extent.

In one embodiment, the playing unit further comprises an information transferring unit configured to receive information of the telephone number which is transferred by the mobile phone when the mobile phone receives the incoming call; and a playing device configured to inquire one prompt sound based on the information of the telephone number for playing the inquired prompt sound.

In one embodiment, the information of the telephone number comprises a telephone number and a number of the prompt sound corresponding to the telephone number, and the playing device is configured to inquire one prompt sound corresponding to the telephone number based on the number of the prompt sound corresponding to the telephone number for playing the inquired prompt sound.

In one embodiment, the presetting unit further comprises a setting unit configured to divide the telephone numbers into a plurality of groups, wherein the telephone numbers in each group correspond to one prompt sound.

In one embodiment, the system for playing the incoming call sound of the bluetooth-based smart watch further comprises a replying unit configured to feedback an operation instruction inputted by a user to the mobile phone for replying a short text message through the mobile phone.

In one embodiment, the present invention provides a bluetooth-based smart watch. The bluetooth-based smart watch comprises a bluetooth-based unit; at least one processor; a storage unit; and at least one programs stored in the storage unit and executed by the at least one processor, wherein the at least one processor comprises the system for playing the incoming call sound of the bluetooth-based smart watch.

In the present invention, the bluetooth-based smart watch worn on the hand of the user can play the prompt sound to acquire the importance degree of the number of the incoming call when it is inconvenient to answer the incoming call or check the information of the incoming call for the user. Thus, the user can determine whether to first answer the incoming call, or to first deal with the incoming call in any other manner to ensure that the user will not omit the information of the incoming call and makes timely corresponding operations.

### BRIEF DESCRIPTION OF THE DRAWINGS

FIG. 1 is a flowchart of a method for playing an incoming call sound of a bluetooth-based smart watch according to one embodiment of the present invention;
FIG. 2 is a detailed flowchart of the step S103 in FIG. 1 according to one embodiment of the present invention;
FIG. 3 is a structural block diagram of a system for playing the incoming call sound of the bluetooth-based smart watch according to one embodiment of the present invention;
FIG. 4 is a structural block diagram of a system for playing the incoming call sound of the bluetooth-based smart watch according to another embodiment of the present invention; and
FIG. 5 is a hardware structure block diagram of the bluetooth-based smart watch according to one embodiment of the present invention.

### DETAILED DESCRIPTION OF THE PREFERRED EMBODIMENTS

The present invention is to provide a method for playing an incoming call sound, a system, and a bluetooth-based smart watch thereof. The following embodiments refer to the accompanying drawings for exemplifying specific implementable embodiments of the present invention. It should be noted that the exemplary described embodiments are used to describe and understand the present invention, but the present invention is not limited thereto.

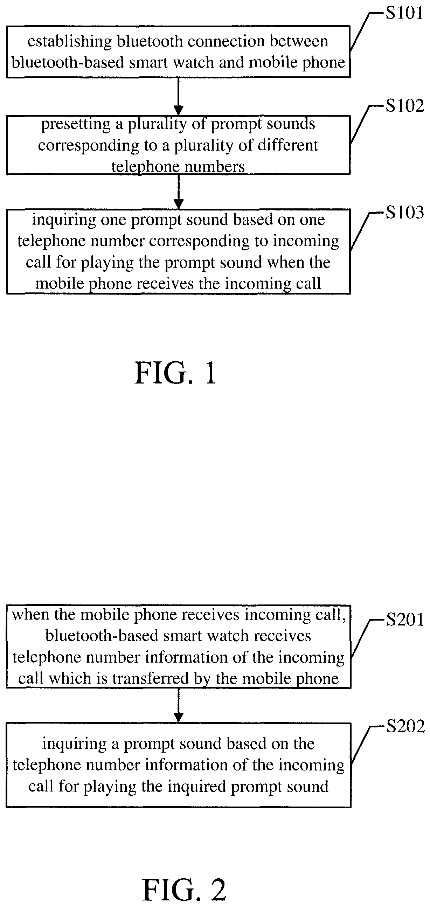

FIG. 1 is a flowchart of a method for playing an incoming call sound of a bluetooth-based smart watch according to one embodiment of the present invention. As shown in FIG. 1, the method includes the following steps.

In step S101, a bluetooth connection between a bluetooth-based smart watch and a mobile phone is established.

In step S102, the bluetooth-based smart watch presets a plurality of prompt sounds corresponding to a plurality of different telephone numbers.

In step S103, when the mobile phone receives an incoming call, the bluetooth-based smart watch inquires one prompt sound based on one telephone number corresponding to the incoming call for playing the prompt sound.

In the present invention, the bluetooth-based smart watch is started and paired with the mobile phone to establish the bluetooth connection with the mobile phone. The bluetooth-based smart watch presets the prompt sounds corresponding to different telephone numbers therein. When the mobile phone receives an incoming call, the bluetooth-based smart watch can inquire a preset prompt sound based on the corresponding telephone number of the incoming call and plays the prompt sound. In this embodiment, the user first hears the prompt sound which is played by the bluetooth-based smart watch, but do not have to check the bluetooth-based smart watch or the mobile phone so that the user can determine whether to answer the call or reject the incoming call based on different prompt sounds. Furthermore, since the user always wears the bluetooth-based smart watch on his hand due to a property of the bluetooth-based smart watch, the user can first acquire the information of the incoming call from anywhere and at any time as long as the bluetooth-based smart watch is in a range of the bluetooth connection of the mobile phone, so as to avoid missing important calls or information. Moreover, when the user sets the mobile phone in a mute or vibration mode on some occasions and thus, the user cannot hear the sound of the incoming call, the bluetooth-based smart watch plays the prompt sound to ensure that the user will not omit the information of the incoming call to improve the user experience for a convenient use.

Since the bluetooth-based smart watch has to play the prompt sound, there is a need to provide the bluetooth-based smart watch with a speaker. For example, the prompt sounds may include a plurality of levels, where each level of the prompt sounds represents different importance extent. In other words, each prompt sound represents an importance degree of the telephone number of the incoming call. For example, the telephone numbers are divided into several groups, where the telephone numbers in each group correspond to a prompt sound. In this way, the telephone numbers are divided into a plurality of types, the telephone numbers in different types include different levels, such as four levels. For example, the boss, important customers and supervisors of the telephone numbers are regarded as a first level. An elder members and family members are regarded as a second level. Ordinary friends are regarded as a third level. Little contact persons and unknown telephone numbers are regarded as a fourth level. Each telephone number has its own level and corresponds to a prompt sound. When the bluetooth-based smart watch plays a prompt sound, the bluetooth-based smart watch can acquire the level corresponding to the telephone number to determine whether to answer the call or reject the incoming call.

In one embodiment, the levels of the prompt sounds are divided into an alarm, a reminder, a pleasure, and a beep, where the sounds of the alarm are defined as the first, second, third and fourth level respectively.

In one embodiment, while presetting the prompt sounds, a system function acquires all the telephone numbers of the contact persons in the mobile phone and the telephone numbers are preset. The contact persons are listed in a presetting interface and each contact person corresponds to a sound type list. The user adds a sound type list to the contact person in the presetting interface based on desired requirement. In another embodiment, the user clicks the option "presetting first level" shown in the presetting interface and a field is shown in the left side of each contact person so that the user can click the field of at least one contact person on one level. The rest of levels can be preset in the same manner. Still in another embodiment, the user clicks option "presetting first level" shown in the presetting interface by a dragging operation, where the left side shows all the contact persons and the right side shows the contact persons with the first level. In one embodiment, at least one contact person in the left side of the presetting interface can be added to the right side by either the dragging or the clicking operation. After the user completes the presetting procedure, the mobile phone will store the information of the presetting procedure.

Furthermore, since it is necessary to manually configure each prompt sound of each contact person during the presetting procedure, the presetting procedure needs more setting steps. The user may perform an intelligent setting for automatically presetting step after the above-mentioned manual presetting step, to replace the above-mentioned manual presetting step, or combines the intelligent setting with the manual setting. In other words, after the prompt sound corresponding to one contact person is preset manually, the bluetooth-based smart watch plays the prompt sound based on the corresponding contact person when the contact person makes an incoming call. If the contact person has no original prompt sound, the prompt sound can be automatically preset based on a contact frequency and a contact time length by a self-learning algorithm.

In the self-learning algorithm, the contact frequency and the contact time length have a weighting value respectively. For example, the weighting value of the contact frequency (as times) is 0.7 and the weighting value of the contact duration is 0.3, where the frequency and the time length are used to compute the total score of the contact person. In one case, the total score of one contact person is computed by formula "=10*0.7+5*0.3=8.5, where "10" is the frequency of the contact person and "5" is the total time length of the contact person. In this way, the total score of each contact person is computed and the prompt sounds in the top five total scores of the contact persons are configured as an alarm sound. The prompt sounds in the rank from fifth to tenth of total scores of the contact persons are configured as a reminder sound. The prompt sounds in the rank from tenth to twentieth of total scores of the contact persons are configured as a pleasure sound. The prompt sounds in the rest of total scores of the contact persons are configured as a beeping sound. According to the above-mentioned descriptions, the total scores of the contact person are computed by the contact frequency and communication time length and the prompt sound is configured to complete the presetting procedure. The aforementioned manner fully reflects the closeness between the contact persons and the user and the self-learning algorithm is performed according to the contact rule, where a regular contact of the contact rule is configured as "important" and little contact of the contact rule is configured as "secondary". Over time, since the number of contact frequency and the contact time length of the contact persons are continuously accumulated to change, so that the longer it continues, the computed total scores by the above algorithm will more accurately reflect the importance degree of each contact person, which is more suitable for use in the present invention.

Furthermore, as shown in FIG. 2, the step S103 further includes the following steps.

In step S201, when the mobile phone receives an incoming call, the bluetooth-based smart watch receives the telephone number information of the incoming call which is transferred by the mobile phone.

In step S202, the bluetooth-based smart watch inquires a prompt sound based on the telephone number information of the incoming call and plays the inquired prompt sound.

When the mobile phone receives an incoming call, the mobile phone transfers the telephone number information of the incoming call to the bluetooth-based smart watch, where the telephone number information of the incoming call includes a telephone number and a number of the prompt sound corresponding to the telephone number. In this manner, after the bluetooth-based smart watch receives the telephone number information of the incoming call, the bluetooth-based smart watch inquires the prompt sound based on the number of the prompt sound and plays the inquired prompt sound.

In embodiment, when the boss or client makes a phone call, the bluetooth-based smart watch sends an alarm sound and the user has no need to check the mobile phone while the user drives a car and receives a sudden phone call. The user simply determines whether the phone call is important by identifying the prompt sound transferred by the paired bluetooth-based smart watch. If there is a need to immediately answer or later reply to the incoming call, thereby greatly facilitating the use, the security risk is also reduced in the driving process of the user.

Furthermore, after the step S103, the method further includes the following step.

In step S104, the bluetooth-based smart watch feedbacks an operation instruction inputted by the user to the mobile phone for replying a short text message through the mobile phone.

If the user needs to answer the incoming call, the user has to perform corresponding operation instruction. For example, the user answer the incoming call by using a bluetooth-based headset or other manners. If the user is unwilling to answer the incoming call and only hopes to inform that the user is driving a car and processes other matters, it is inconvenient to answer the incoming call such that the user can reply the incoming call by clicking a reply button of the bluetooth-based smart watch. After receiving the operation instructions, the bluetooth-based smart watch feedbacks the information to the mobile phone so that the mobile phone can automatically reply the short text message to the telephone number of the incoming call, where the format of the short text message, such as "I am driving a car, it is inconvenient to answer the incoming call, and reply later", can be set in advance.

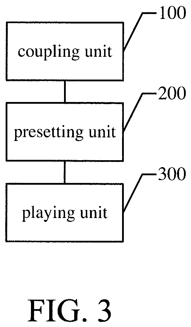

Based on the aforementioned methods, the present invention provides a system for playing the incoming call sound of the bluetooth-based smart watch, as shown in FIG. 3. The system includes that:
A coupling unit 100 is configured to establish a bluetooth connection between a bluetooth-based smart watch and a mobile phone.
A presetting unit 200 is configured to preset a plurality of prompt sounds corresponding to a plurality of different telephone numbers.
A playing unit 300 is configured to inquire a prompt sound based on the corresponding telephone number of the incoming call for playing the prompt sound when the mobile phone receives an incoming call.

In one embodiment, the presetting unit 200 is configured to preset a plurality of prompt sounds corresponding to a plurality of different telephone numbers by using a self-learning algorithm.

In one embodiment, the presetting unit 200 acquires a rank of different telephone numbers based on the contact frequency and contact time length of the different telephone numbers, and the presetting unit 200 presets a prompt sound corresponding to each telephone number based on the rank of the different telephone numbers.

In one embodiment, the prompt sounds include a plurality of levels, and each level of the prompt sounds represents a different importance extent.

In one embodiment, the prompt sounds include four levels, and each level of the prompt sounds represents the different importance extent.

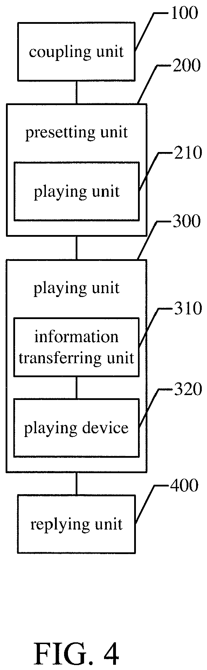

In one embodiment, as shown in FIG. 4, the playing unit 300 includes that:

An information transferring unit 310 is configured to receive the information of the telephone number which is transferred by the mobile phone when the mobile phone receives the incoming call.

A playing device 320 is configured to inquire one prompt sound based on the information of the telephone number for playing the inquired prompt sound.

In one embodiment, the information of the telephone number includes a telephone number and a number of the prompt sound corresponding to the telephone number. The playing device 320 is configured to inquire one prompt sound corresponding to the telephone number based on the number of the prompt sound corresponding to the telephone number for playing the inquired prompt sound.

In one embodiment, the presetting unit 200 further includes:

A setting unit 210 is configured to divide the telephone numbers into a plurality of groups, where the telephone numbers in each group correspond to one prompt sound.

A replying unit 400 is configured to feedback an operation instruction inputted by the user to the mobile phone for replying a short text message through the mobile phone.

Since the detailed feature of the above-mentioned units has been described in the method, it will not be repeated here.

Based on the above embodiments, the present invention further provides a bluetooth-based smart watch to perform a method for playing an incoming call sound of a bluetooth-based smart watch, and/or to operate a system for playing the incoming call sound of the bluetooth-based smart watch.

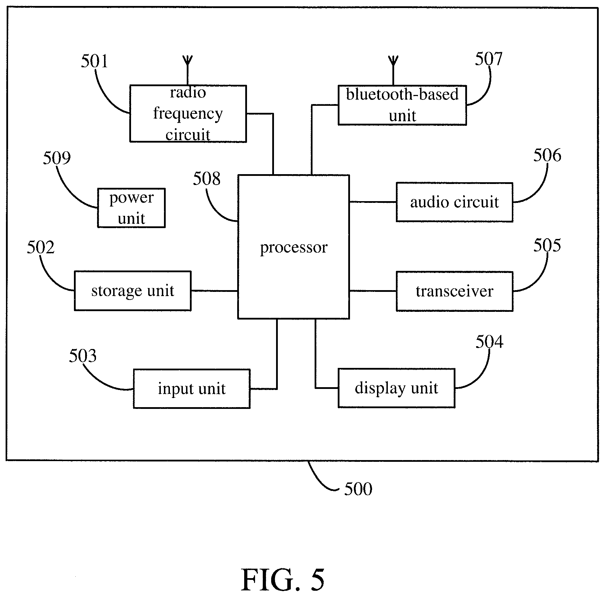

As shown in FIG. 5, the bluetooth-based smart watch 500 includes:

A radio frequency (RF) circuit 501 includes a storage unit 502 with at least one computer readable storage media, an input unit 503, a display unit 504, a transceiver 505, an audio circuit 506, a bluetooth-based unit 507, a processor 508 with at least one processing core, and a power unit 509. Person skilled in the art should be noted that the hardware structure block diagram may include more or less components, combine some units, or arrange the units in different manner.

In one embodiment, the processor 508 downloads executable program codes corresponding to a procedure of at least one application program to the storage unit 502, and the processor 508 operates the application programs in the storage unit 502 for performing a method for playing an incoming call sound or a system for playing the incoming call sound to implement corresponding functions. The detailed operation is referred to the above-describe embodiments and will not be repeated here.

Based on the descriptions of embodiments, it can be understood that, in an embodiment of the present invention, all or partial of the technical schemes of the present invention can be performed by software products, hardware products, firmware products and the combinations using computer programs, where the computer programs are stored in the computer readable storage media. When the computer programs are performed, it can include the procedures of the above-mentioned embodiments.

According to the above-mentioned descriptions, the bluetooth-based smart watch worn on the hand of the user can play the prompt sound to acquire the importance degree of the number of the incoming call when it is inconvenient to answer the incoming call or check the information of the incoming call for the user. Thus, the user can determine whether to first answer the incoming call, or to first deal with the incoming call in any other manner to ensure that the user will not omit the information of the incoming call and makes timely corresponding operations.

As is understood by persons skilled in the art, the foregoing preferred embodiments of the present disclosure are illustrative rather than limiting of the present disclosure. It is intended that they cover various modifications and similar arrangements be included in the spirit and scope of the present disclosure, the scope of which should be accorded the broadest interpretation so as to encompass all such modifications and similar structures.

## Claims

1. A method for playing an incoming call sound of a bluetooth-based smart watch, comprising:
establishing a bluetooth connection between a bluetooth-based smart watch and a mobile phone;
presetting a plurality of prompt sounds corresponding to a plurality of different telephone numbers; and
inquiring one prompt sound based on one telephone number corresponding to an incoming call for playing the prompt sound when the mobile phone receives the incoming call.

2. The method for playing the incoming call sound of the bluetooth-based smart watch of claim 1, wherein presetting the prompt sounds corresponding to the telephone numbers further comprises a self-learning algorithm to preset the prompt sounds corresponding to the telephone numbers.

3. The method for playing the incoming call sound of the bluetooth-based smart watch of claim 2, wherein the self-learning algorithm to preset the prompt sounds corresponding to the telephone numbers further comprises acquiring a rank of the telephone numbers based on a contact frequency and a contact time length of the telephone numbers, and presetting a prompt sound corresponding to each telephone number based on the rank of the telephone numbers.

4. The method for playing the incoming call sound of the bluetooth-based smart watch of claim 1, wherein the prompt sounds comprises a plurality of levels, and each level of the prompt sounds represents a different importance extent.

5. The method for playing the incoming call sound of the bluetooth-based smart watch of claim 4, wherein the prompt sounds comprises four levels, and each level of the prompt sounds represents the different importance extent.

6. The method for playing the incoming call sound of the bluetooth-based smart watch of claim 1, wherein inquiring one prompt sound based on one telephone number corresponding to the incoming call for playing the prompt sound when the mobile phone receives the incoming call further comprises:
receiving an information of the telephone number which is transferred by the mobile phone when the mobile phone receives the incoming call; and
inquiring one prompt sound based on the information of the telephone number for playing the inquired prompt sound.

7. The method for playing the incoming call sound of the bluetooth-based smart watch of claim 6, wherein the information of the telephone number comprises a telephone number and a number of the prompt sound corresponding to the telephone number, and inquiring one prompt sound based on the information of the telephone number for playing the inquired prompt sound further comprises:
inquiring one prompt sound corresponding to the telephone number based on the number of the prompt sound corresponding to the telephone number for playing the inquired prompt sound.

8. The method for playing the incoming call sound of the bluetooth-based smart watch of claim 1, wherein presetting the prompt sounds corresponding to the telephone numbers further comprises:
dividing the telephone numbers into a plurality of groups, wherein the telephone numbers in each group correspond to one prompt sound.

9. The method for playing the incoming call sound of the bluetooth-based smart watch of claim 1, wherein after inquiring one prompt sound based on one telephone number corresponding to the incoming call for playing the prompt sound when the mobile phone receives the incoming call, the method further comprises:
feedbacking an operation instruction inputted by a user to the mobile phone for replying a short text message through the mobile phone.

10. The method for playing the incoming call sound of the bluetooth-based smart watch of claim 9, wherein the short text message is set in advance.

11. A system for playing an incoming call sound of a bluetooth-based smart watch, comprising:
a coupling unit configured to establish a bluetooth connection between a bluetooth-based smart watch and a mobile phone;
a presetting unit configured to preset a plurality of prompt sounds corresponding to a plurality of different telephone numbers; and
a playing unit configured to inquire one prompt sound based on one telephone number corresponding to an incoming call for playing the prompt sound when the mobile phone receives the incoming call.

12. The system for playing the incoming call sound of the bluetooth-based smart watch of claim 11, wherein the presetting unit is configured to preset the prompt sounds corresponding to the telephone numbers by plurality a self-learning algorithm.

13. The system for playing the incoming call sound of the bluetooth-based smart watch of claim 12, wherein the presetting unit is configured to acquire a rank of the telephone numbers based on a contact frequency and a contact time length of the telephone numbers, and to preset a prompt sound corresponding to each telephone number based on the rank of the telephone numbers.

14. The system for playing the incoming call sound of the bluetooth-based smart watch of claim 11, wherein the prompt sounds comprises a plurality of levels, and each level of the prompt sounds represents a different importance extent.

15. The system for playing the incoming call sound of the bluetooth-based smart watch of claim 14, wherein the prompt sounds comprises four levels, and each level of the prompt sounds represents the different importance extent.

16. The system for playing the incoming call sound of the bluetooth-based smart watch of claim 11, wherein the playing unit further comprises:
an information transferring unit configured to receive an information of the telephone number which is transferred by the mobile phone when the mobile phone receives the incoming call; and
a playing device configured to inquire one prompt sound based on the information of the telephone number for playing the inquired prompt sound.

17. The system for playing the incoming call sound of the bluetooth-based smart watch of claim 16, wherein the information of the telephone number comprises a telephone number and a number of the prompt sound corresponding to the telephone number, and the playing device is configured to inquire one prompt sound corresponding to the telephone number based on the number of the prompt sound corresponding to the telephone number for playing the inquired prompt sound.

18. The system for playing the incoming call sound of the bluetooth-based smart watch of claim 11, wherein the presetting unit further comprises:
a setting unit configured to divide the telephone numbers into a plurality of groups, wherein the telephone numbers in each group correspond to one prompt sound.

19. The system for playing the incoming call sound of the bluetooth-based smart watch of claim 11, further comprising a replying unit configured to feedback an operation instruction inputted by a user to the mobile phone for replying a short text message through the mobile phone.

20. A bluetooth-based smart watch, comprising:
a bluetooth-based unit;
at least one processor;
a storage unit; and
at least one programs configured to be stored in the storage unit and executed by the at least one processor, wherein the at least one processor comprises the system for playing the incoming call sound of the bluetooth-based smart watch of claims 11 to 19.
